Europäisches Patentamt

European Patent Office

Office européen des brevets

(19)

(11) **EP 0 808 454 B1**

(12) **EUROPÄISCHE PATENTSCHRIFT**

(45) Veröffentlichungstag und Bekanntmachung des Hinweises auf die Patenterteilung:
**05.06.2002   Patentblatt 2002/23**

(51) Int Cl.⁷: $G01N\ 21/53$, G01N 22/00

(86) Internationale Anmeldenummer:
**PCT/EP96/00564**

(21) Anmeldenummer: **96901801.9**

(22) Anmeldetag: **09.02.1996**

(87) Internationale Veröffentlichungsnummer:
**WO 96/24838 (15.08.1996 Gazette 1996/37)**

(54) **VERFAHREN ZUM ERMITTELN DER BELADUNG EINES GASSTROMS MIT FESTSTOFFANTEILEN**

PROCESS FOR DETERMINING THE SOLIDS CONTENT OF A GAS FLOW

PROCEDE POUR DETERMINER LA TENEUR EN SOLIDES D'UN FLUX GAZEUX

(84) Benannte Vertragsstaaten:
**DE GB**

(30) Priorität: **11.02.1995   DE 19504544**

(43) Veröffentlichungstag der Anmeldung:
**26.11.1997   Patentblatt 1997/48**

(73) Patentinhaber: **Reich, Ernst**
**79410 Badenweiler (DE)**

(72) Erfinder: **Reich, Ernst**
**79410 Badenweiler (DE)**

(74) Vertreter: **Weiss, Peter, Dr. rer. nat.**
**Dr, Weiss, Weiss & Brecht**
**Postfach 1250**
**78229 Engen (DE)**

(56) Entgegenhaltungen:

| | |
|---|---|
| WO-A-90/03568 | DE-A- 3 839 348 |
| DE-A- 4 426 280 | DE-C- 384 422 |
| US-A- 4 580 441 | |

• **PATENT ABSTRACTS OF JAPAN vol. 008, no. 109 (P-275), 22.Mai 1984 & JP,A,59 019814 (SHIN NIPPON SEITETSU KK;OTHERS: 01), 1.Februar 1984,**

**Beschreibung**

Die Erfindung betrifft ein Verfahren zur Regelung der Feuerung eines Kessels in einem Kohlekraftwerk durch Ermitteln der Beladung eines Gasstroms mit Feststoffanteilen, insbesondere Kohlestaub, sowie eine Vorrichtung hierfür.

In vielen Bereichen der Industrie werden Feststoffanteile mittels einem Gasstrom transportiert. Aus der WO90/03568 ist beispielsweise ein Verfahren beschrieben, durch das ein unverbrannter Kohlegehalt in einer Flugasche ermittelt wird. Dies geschieht durch ein Mikrowellensignal, welches durch die Flugasche geschickt wird. Ermittelt wird die Dämpfung und/oder die Phasenverschiebung dieses Mikrowellensignals.

In Patent Abstracts of Japan, vol 8, no. 109 (P-275), 22. Mai 1984, JP-A-59 019814, wird allgemein ein Verfahren zum Feststellen der Dichte und der Geschwindigkeit von in einer Rohrleitung transportieren Partikel beschrieben. Dies geschieht allein durch die Ermittlung des Doppler-Effektes. Je schneller die Geschwindigkeit der Teilchen ist, um so niedriger ist die Frequenz der reflektierten Wellen.

In der US-A-4 580, 441 wird ein Verfahren zum Ermitteln von "Smoke" in ein Abgasrohr beschrieben. Auch dies geschieht durch Ermittlung der Dämpfung der durchgesandten Mikrowellen.

Im vorliegenden Fall geht es vor allem darum, die Versorgung von Kessel eines Kohlekraftwerkes mittels Kohlestaub zu messen und zu regeln. Dies soll jedoch nur ein bevorzugtes Ausführungsbeispiel der vorliegenden Erfindung sein.

In den heute bekannten Kohlekraftwerken wird Kohlestaub durch Trägerluft entsprechenden Brennern, zugeführt, die in unterschiedlichen Ebenen in einem Kessel angeordnet sind. Ferner gelangt in den Kessel auch Verbrennungsluft, welche die Verbrennung des Kohlestaubs in dem Kessel unterstützt. Zur Einstellung der zugeführten Menge an Kohlenstaubpartikeln sind in einer entsprechenden Förderleitung Klappen, Verteiler oder dergleichen Stellglieder eingesetzt, welche einmal, nämlich bei Inbetriebnahme des Kohlekraftwerkes, eingestellt werden und dann über einen längeren Zeitraum in dieser Stellung verbleiben.

In bestimmten Zeiträumen erfolgt dann eine Probeentnahme aus dem Förderstrom, zur neuen Einstellung der Feuerung. Eine falsche Einstellung der Feuerung wird deshalb nicht erkannt, weil z.Z. die Menge an Kohlenstaubpartikeln nur diskontinuierlich gemessen werden kann. Die Zufuhr einer falschen Menge an Kohlestaubpartikeln zum Kessel wirkt sich aber sehr nachteilig aus. Zum einen wird der Wirkungsgrad wesentlich erniedrigt, zum anderen die Abgaswerte erhöht. Ferner unterliegen der Kessel und auch der Brenner infolge einer falschen Menge an Kohlestaubpartikeln einem erhöhten Verschleiß.

Denkbar wäre auch der Einsatz von Meßgeräten in dem Förderstrom selbst, was aber den Nachteil hat, daß der Förderstrom im Bereich des Meßgerätes eingeschnürt wird, so daß es hier zu Druckverlusten oder Abrasion kommt. Beides ist unerwünscht.

Der vorliegenden Erfindung liegt die Aufgabe zugrunde, ein Verfahren und eine Vorrichtung der oben genannten Art zu entwickeln, mit denen auf einfache Art und Weise eine kontinuierliche Ermittlung der Feststoffanteile in einem Gasstrom möglich wird, ohne daß dieser Gasstrom in irgend einer Weise beeinträchtigt wird.

Zur Lösung dieser Aufgabe führt, daß durch den Gasstrom mit den Feststoffanteilen bei einzelnen Zuleitungen zu einzelnen Brennern jeweils elektromagnetische Wellen von einem Sender zu einem Empfänger geschickt werden und die jeweiligen Amplituden der frequenzverschobenen, elektromagnetischen Wellen ermittelt, miteinander verglichen und daraus auf die Beladung des Gasstromes mit Feststoffanteilen geschlossen wird.

Der große Vorteil dieses Verfahrens liegt zum einen darin, daß es kontinuierlich möglich ist, den Gasstrom mit den Feststoffanteilen mit den elektromagnetischen Wellen zu beaufschlagen. Dementsprechend kann eine kontinuierliche Messung der Feststoffanteile erfolgen. Des weiteren erübrigen sich mechanische Einbauten in beispielsweise einem Sensorrohr, die zu der oben erwähnten Störung des Gasstromes führen.

Die Erfindung macht sich den Vorteil der elektromagnetischen Wellen zunutze, daß Teile dieser elektromagnetischen Wellen an Feststoffanteilen reflektiert und frequenzverschoben werden. Aus der Amplitude der empfangenen frequenzverschobenen elektromagnetischen Welle kann auf die Beladung des Gasstromes mit Feststoffanteilen zurückgeschlossen werden, wobei dies anfänglich sicherlich nur ein Relativwert ist. Durch Bewertung der Relativmessung mit einem Korrekturfaktor ergibt sich eine Absolutmessung.

Beispielsweise könnte dies folgendermaßen geschehen:

- Auf einem Plattenband, mit welchem Kohle einer Mühle zur Herstellung eines Kohlestaubs zugeführt wird, erfolgt eine Erfassung der Durchsatzleistung und/oder der Menge. Dies kann mit handelsüblichen Meßsystemen erfolgen, z.B. mit einer radiometrischen Bandwaage.

- Aus den Einzelmessungen des Kohlestaubstromes in den Brennerleistungen bzw. den Sensorrohren wird die Summe gebildet, um so die Gesamtdurchsatzleistung und/oder Menge zu ermitteln.

- Der Korrekturfaktor, um aus der Relativmessung des Kohlestaubstromes eine Absolutmessung zu machen, errechnet sich aus:

$$K = \frac{\text{Durchsatzleistung (Menge Plattenband)}}{\text{Durchsatzleistung (Menge Einzelmessung)}}$$

Mit diesem Korrekturfaktor wird jeder Meßwert aus den Einzelmessungen bewertet.

Für die Regelung der Feuerung eines Kessels mit Kohlestaub in einem Kohlekraftwerk genügen aber in der Regel die Relativwerte, wobei die Relativwerte von den einzelnen Zuleitungen zu den einzelnen Brennern miteinander verglichen werden.

Die Messung der Beladung des Gasstromes mit Feststoffteilchen geschieht durch die Ermittlung einer Amplituden der reflektierten frequenzverschobenen elektromagnetischen Wellen. Das Verfahren macht sich die Wirkung des Reflexionseffektes zunutze. Die Amplitude eines reflektierten, frequenzverschobenen, elektromagnetischen Wellensignals, insbesondere eines Mikrowellensignals ist ein Maß für die Beladung des Gasstromes und kann als solches zur Signalauswertung genutzt werden.

Sowohl Sender als auch Empfänger für elektromagnetische Wellen sind handelsüblich. Nur als Beispiel wird hier erwähnt, daß es sich bei dem Sender um einen Gunn-Oszillator handeln kann. Für den Empfänger kann dagegen beispielsweise eine Schottky-Diode in einem Hohlraumresonator verwendet werden. Dies sind aber nur Ausführungsbeispiele.

Als elektromagnetische Wellen werden bevorzugt Mikrowellen mit einer Frequenz von über 1GHz verwendet.

Wird die Beladung eines Gasstromes anhand der Amplitude des reflektierten, frequenzverschobenen Mikrowellensignals ermittelt, so bietet es sich an, Sender und Empfänger in einer Antenne zu integrieren. Diese Antenne sendet dann die entsprechenden elektromagnetischen Wellen bevorzugt senkrecht zum Gasstrom aus, so daß diese Wellen an der gegenüberliegenden Innenwand des Förderrohres reflektiert und von der gleichen Antenne wieder empfangen werden. Das gleiche gilt auch für diejenigen Wellen, die von den Feststoffteilen reflektiert werden.

In einem bevorzugten Ausführungsbeispiel wird nicht nur die Beladung des Gasstromes mit Feststoffanteilen ermittelt, sondern auch deren Geschwindigkeit. Aus der Verknüpfung der beiden Signale entsteht das Durchsatzsignal. Dies geschieht dadurch, daß der Sender gleichzeitig auch als Empfänger ausgestaltet ist. Dieser Empfänger empfängt die von den einzelnen Kohlestaubpartikeln direkt zurückreflektierten Wellen, wobei infolge des Dopplereffekts eine Frequenzverschiebung erzeugt wird. Beide Frequenzen, d.h. die ausgesandte wie auch die reflektierte, unterscheiden sich nur geringfügig. Aus der Frequenzdifferenz läßt sich die Geschwindigkeit ermitteln.

Es ist ferner bekannt, daß durch die trichterförmige Ausgestaltung der Antenne auch die elektromagnetischen Wellen kegelförmig in das Sensorrohr eindringen. Das bedeutet aber, daß links und rechts von diesem Kegel Toträume entstehen, in denen keine Wellen absorbiert oder reflektiert werden. Gerade in diesen Toträumen könnte aber eine Beladung des Gasstromes mit einem unterschiedlichen Feststoffanteil gegeben sein.

Um auch den Feststoffanteil in diesen Toträumen zu ermitteln, soll in der Öffnung des Sensorrohres, durch welche der elektromagnetische Wellenkegel in das Sensorrohr eindringt, ein Einsatz eingesetzt sein, der einen Linseneffekt mit sich bringt. D.h., dieser Einsatz streut die elektromagnetischen Wellen auch zur Seite hin, so daß die Toträume eliminiert werden.

Bevorzugt besteht der Einsatz aus zwei Schichten. Die eine Schicht besteht aus einem Werkstoff, durch den elektromagnetische Wellen keine Dämpfung erfahren, wobei diese Schicht rohrseitig gekrümmt ist, wodurch der Linseneffekt entsteht. Bevorzugt besteht diese Schicht aus einem verlustarmen Kunststoff.

Zum Rohr hin ist diese Schicht noch mit einer schwach dämpfenden Schicht belegt, wozu bevorzugt Schmelzbasalt verwendet wird, der die Kunststofflinse vor Abrasion schützt.

Als Alternative zur zweiteiligen Linse kann auch eine Linse einteilig aus Keramik verwendet werden.

Bei der Anwendung der Reflexionsmethode zur Beladungsmessung spielt der Einbauort der Antenne eine entscheidende Rolle für die Funktion der Messung. Der Einbauort muß dabei so gewählt werden, daß dort die Verteilung der Feststoffe im Rohr möglichst homogen ist. Dies ist z.B. im Bereich einer Rohrkrümmung oder nach einem in das Rohr eingebrachten Diffusor gegeben.

Von der Homogenität der Feststoffströmung hängt auch ab, ob mit oder ohne dem oben beschriebenen Linseneinsatz gemessen werden kann.

Das gesamte Verfahren läßt sich auch bei bereits bestehenden Kohlekraftwerken durchführen, die Vorrichtung ist leicht zu integrieren. Das Meßsystem ist lediglich mit einem Regler zu koppeln, der von extern die entsprechenden Sollwerte erhält. Entsprechend dem Vergleich der Ist- und der Sollwerte kann dann der Regler entsprechende Stellorgane, wie Klappen oder Ventile, ansteuern.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 ein blockschaltbildlich dargestelltes Schema eines erfindungsgemäßen Verfahrens zum Regeln der Feuerung eines Kessels mit Kohlestaub in einem Kohlekraftwerk;

Figur 2 einen vergrößert dargestellten Ausschnitt aus Figur 1 im Bereich einer Meßstelle;

Figur 3 einen Querschnitt durch ein Sensorrohr im Bereich der Meßstelle gemäß Figur 2;

Figur 4 einen schematisch dargestellten Ausschnitt durch ein anderes Ausführungsbeispiel einer Meßstelle.

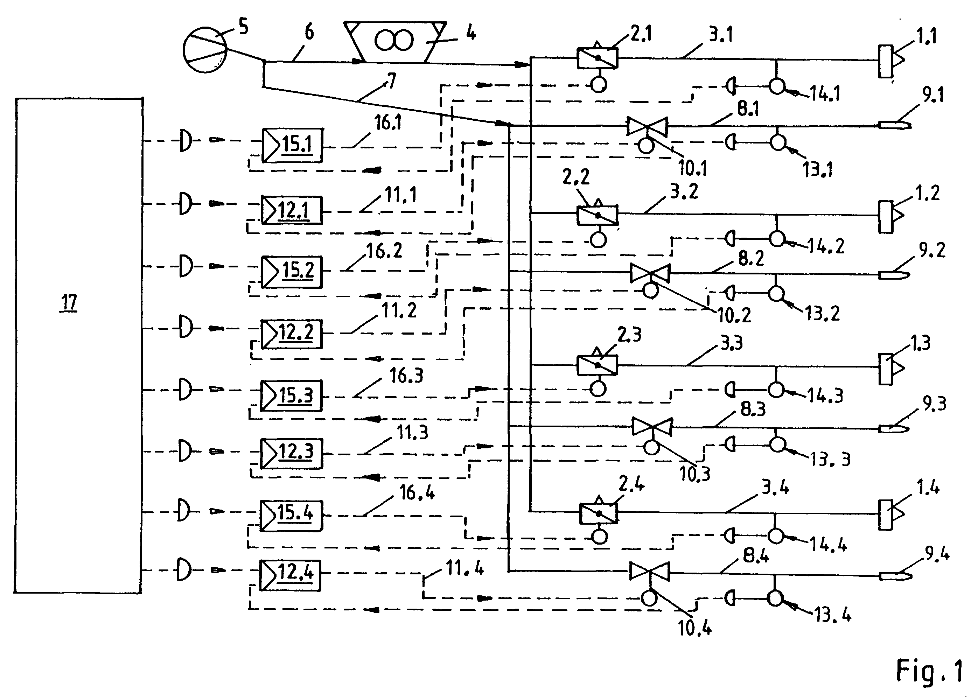

In einem nicht näher gezeigten Kessel eines Kohlekraftwerkes sind gemäß Figur 1 in verschiedenen Ebenen jeweils mehrere Brenner hier 1.1 bis 1.4 angeordnet. Jeder Brenner 1 steht über eine Förderleitung 3.1 bis 3.4 mit einer Kohlemühle 4 in Verbindung, wobei in die Leitung zwischen Kohlemühle 4 und Brenner 1.1 bis 1.4 jeweils ein Stellglied 2.1 bis 2.4 an geeigneter Stelle eingeschaltet ist.

Von einem nicht näher gezeigten Austrag der Kohlemühle 4 erfolgt ein Transport des Kohlestaubs mit Hilfe von Trägerluft durch das Stellglied 2 und die Förderleitung 3 zu dem Brenner 1. Dabei wird die Trägerluft von einem Gebläse 5 erzeugt.

Zwischen Gebläse 5 und Kohlemühle 4 zweigt von einer Trägerluftleitung 6 eine Verbrennungsluftleitung 7 ab, die sich in einzelne Zweigleitungen 8.1 bis 8.4 aufzweigt, wobei jede Zweigleitung 8.1 bis 8.4 mit einer Düse 9.1 bis 9.4 verbunden ist. Jede Düse 9.1 bis 9.4 ist jeweils einem Brenner 1.1 bis 1.4 zugeordnet und versorgt den Brennerbereich mit Verbrennungsluft.

In jede Zweigleitung 8.1 bis 8.4 ist ein Stellglied 10.1 bis 10.4 eingeschaltet, welches über eine Steuerleitung 11.1 bis 11.4 mit einem Regler 12.1 bis 12.4 verbunden ist. Dieser Regler erhält Werte von einer Meßstelle 13.1 bis 1.3.4, welche einen Durchfluß an Verbrennungsluft zwischen dem Stellglied 10.1 bis 10.4 und der Düse 9.1 bis 9.4 ermittelt.

In ähnlicher Weise ist auch zwischen dem Stellglied 2.1 bis 2.4 und dem Brenner 1.1. bis 1.4 eine Meßstelle 14.1 bis 14.4 vorgesehen, die Werte jeweils an einen weiteren Regler 15.1 bis 15.4 abgibt. Jeder Regler 15.1 bis 15.4 ist über eine weitere Steuerleitung 16.1 bis 16.4 mit dem Stellglied 2.1 bis 2.4 verbunden.

Die entsprechenden Sollwerte zur Regelung der Stellglieder 2.1 bis 2.4 und 10.1 bis 10.4 werden von einer Steuerung 17 dem Regler 12.1 bis 12.4 und 15.1 bis 15.4 vorgegeben.

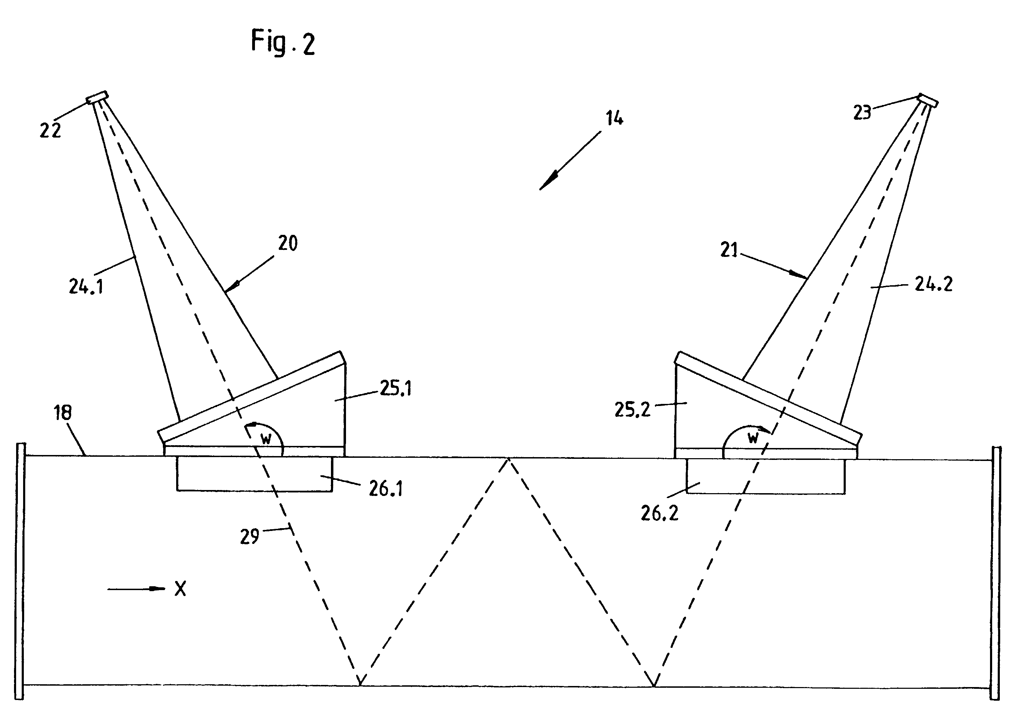

Während sich der reine Verbrennungsluftdurchsatz an den Meßstellen 13.1 bis 13.4 auf beliebige bekannte Art ermitteln läßt, wird die Messung des Kohlestaubs in den Meßstellen 14.1 bis 14.4 auf eine neue, erfinderische Weise ermittelt. Eine dieser Meßstellen 14 ist in Figur 2 vergrößert dargestellt.

Einem Sensorrohr ist einerseits ein Sender 20 für eine Mikrowelle und andererseits ein Empfänger 21 für diese Mikrowelle aufgesetzt. Bei dem Sender 20 handelt es sich bevorzugt um einen Gunn-Oszillator in einem Hohlraumresonator, während bei dem Empfänger 21 eine Schottky-Diode in einem Hohlraumresonator angeordnet ist.

In einem bevorzugten Ausführungsbeispiel ist im übrigen der Sender 20 gleichzeitig als Sender und Empfänger ausgebildet, wie dies später noch beschrieben wird.

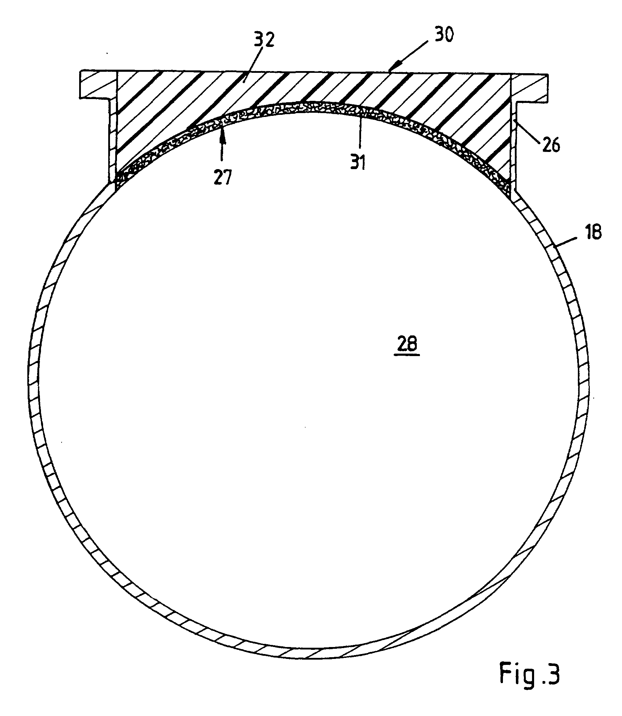

An das Gunn-Element 22 bzw. die Schottky-Diode 23 schließt sich eine trichterförmige Antenne 24.1 bzw. 24.2 an, die einem Winkelgehäuse 25.1 bzw. 25.2 aufgesetzt ist. Dieses Winkelgehäuse 25.1 bzw. 25.2 ist über Verbindungsschalen 26.1 bzw. 26.2 mit dem Sensorrohr 18 verbunden. Das Sensorrohr 18 ist in diesem Bereich ausgeschnitten, so daß eine Öffnung 27 (siehe Figur 3) zwischen dem Inneren 28 und der Antenne 24.1 bzw. 24.2 entsteht.

Durch die Ausgestaltung des Winkelgehäuses 25.1 bzw. 25.2 wird der Sender 20 gegenüber dem Sensorrohr 18 in einem Winkel w von über 90° angestellt. Der Winkel w bewirkt, daß die gestrichelt angedeutete elektromagnetische Welle 29 zur Förderrichtung des Kohlestaubs in das Sensorrohr 18 einfällt, in diesem Sensorrohr 18 an den Wänden dreimal reflektiert wird und dann in den im Winkel w gegen die Förderrichtung x angestellten Empfänger 21 einfällt. Dort wird die elektromagnetische Welle von der Schottky-Diode erfaßt und in der Schottky-Diode eine Spannung entsprechend dieser elektromagnetischen Welle erzeugt.

Die Funktionsweise dieser beispielsweise bei einer Messung nach der WO90/03568 oder in der US-A-4 580 441 benutzten Meßstelle 14 ist folgende:

Der Grundgedanke basiert auf der Dämpfung eines Strahlenganges einer elektromagnetischen Welle durch den Kohlestaub. Die elektromagnetische Welle soll einen Frequenzbereich f > als 1 GHz aufweisen. Dieser Mikrowellenbereich bewirkt beim Auftreffen der Wellen auf den Kohlepartikeln einen Spinneffekt der ferrimagnetischen Elemente, woraus eine Strahldämpfung resultiert. Dieser Vorgang wird als ferromagnetische Resonanzabsorption bezeichnet. Sender 20 und Empfänger 21 der elektromagnetischen Wellen werden in das Sensorrohr 18 gerichtet. Dabei erfolgt eine Messung der durch den Kohlestaub erzeugten Dämpfung des Strahlenganges.

Durch die Anstellung von Sender 20 und Empfänger 21 in einem Winkel w wird eine Vervielfachung der Strahlenstrecke erreicht. Dadurch wird auf einer definierten Strecke bei dreifacher Reflexion, wie im vorliegenden Fall, eine Erhöhung der Dämpfungswirkung erzielt. Daraus resultiert eine wesentlich höhere Empfindlichkeit der Messung.

Gleichzeitig wird die Fluggeschwindigkeit der Kohlepartikel erfaßt. Dies geschieht unter Ausnutzung des Dopplereffektes, wobei, wie oben bereits erwähnt, der Sender auch gleichzeitig als Empfänger ausgebildet ist. Beispielsweise könnte in dem Sender 20 neben dem Gunn-Element auch gleichzeitig eine Schottky-Diode angeordnet sein. Hier sind jedoch auch andere Ausführungsformen denkbar, wobei derartige Sender/Empfänger im Handel erhältlich sind.

Durch die geneigte Anordnung des Senders 20 treffen Mikrowellen auf einzelne Kohlenstaubpartikel. Dort werden sie reflektiert, so daß ein Teil der ausgesandten Wellen wieder vom Empfängerteil des Senders 20 empfangen werden kann. Diese Reflexion der mit einer konstanten Frequenz von beispielsweise 24,125 GHz ausgesandten Welle erzeugt infolge des Dopplereffekts eine Frequenzverschiebung. Da beide Frequenzen sich nur gering unterscheiden (ungefähr 1 bis 2 kHz), entsteht ein Differenzsignal, das sich am Sender auskoppeln läßt. Diese ausgekoppelte Frequenz läßt sich folgendermaßen bestimmen:

$$\Delta f = 2 \, \frac{v \cdot \cos\alpha}{c} \, f_0$$

wobei

v = Materialgeschwindigkeit
α = Anstellwinkel
$f_0$ = ausgestrahlte Frequenz
Δf = Frequenzverschiebung
c = Lichtgeschwindigkeit

In einem bevorzugten Ausführungsbeispiel gemäß Figur 3 ist in die von der Verbindungsschale 26 gebildete Öffnung 27 im Sensorrohr 18 ein Einsatz 30 eingesetzt, der einen Linseneffekt mit sich bringt. Ziel dieses Linseneffektes ist es, die abgestrahlten elektromagnetischen Wellen innerhalb des Sensorrohres 18 so aufzuspreizen, daß möglichst wenig Toträume entstehen.

Der Einsatz 30 ist bevorzugt zweischichtig aufgebaut. Eine innere gewölbte Schale 31 besteht aus einem die elektromagnetischen Wellen gering dämpfenden Material. Bevorzugt wird hier Schmelzbasalt verwendet. Darüber ist eine Kunststoffschicht 32 angeordnet, welche die elektromagnetischen Wellen überhaupt nicht dämpft.

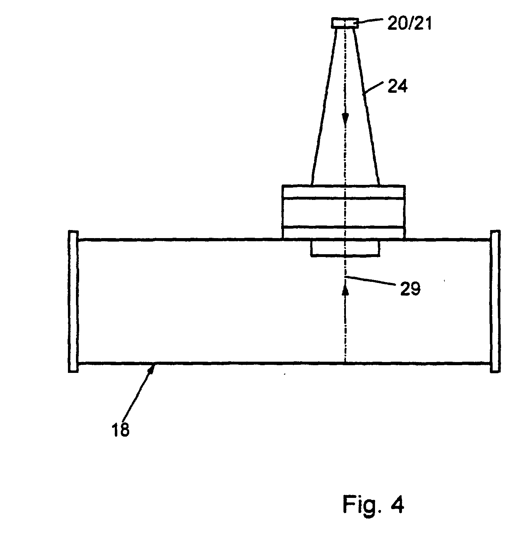

Den oben erwähnten Dopplereffekt, mit dem die Fluggeschwindigkeit der Kohlepartikel ermittelt wird, macht sich auch das erfindungsgemäße Verfahren nach Figur 4 zunutze. Dort sind Sender und Empfänger 20/21 in einer Antenne 24 integriert, wobei diese Antenne 24 bzw. die elektrische Welle 29 z.B. senkrecht zum Förderrohr 18 verläuft. D.h., diese Welle 29 trifft auf die gegenüberliegende Innenwand des Förderrohres 18 und wird senkrecht wieder zurückreflektiert. Trifft diese Welle auf einen in dem Förderrohr 18 bewegten Kohlepartikel, so wird sie reflektiert, wobei zum einen die oben erwähnte Frequenzverschiebung stattfindet, zum anderen aber auch die reflektierte Welle eine andere Amplitude hat. Die Amplitude des reflektierten, frequenzverschobenen Mikrowellensignals stellt ein Maß für die Beladung des Gasstromes dar und kann somit als solches zur Signalauswertung benutzt werden. Die Beladung eines Gasstromes kann damit über die Amplitude der direkt reflektierten Mikrowelle ermittelt werden.

**Patentansprüche**

1. Verfahren zur Regelung der Feuerung eines Kessels in einem Kohlekraftwerk durch Ermitteln der Beladung eines Gasstromes zu diesem Kessel mit Feststoffanteilen, insbesondere mit Kohlestaub, **dadurch gekennzeichnet,** **daß** durch den Gasstrom mit den Feststoffanteilen bei einzelnen Zuleitungen zu einzelnen Brennern jeweils elektromagnetische Wellen von einem Sender zu einem Empfänger geschickt werden und die jeweiligen Amplituden der frequenzverschobenen, elektromagnetischen Wellen ermittelt, miteinander verglichen und daraus auf die Beladung des Gasstromes mit Feststoffanteilen geschlossen wird.

2. Verfahren nach Anspruch 1, **dadurch gekennzeichnet, daß** die elektromagnetischen Wellen auf ihrem Weg zwischen Sender und Empfänger nur einmal reflektiert werden.

3. Verfahren nach Anspruch 1, **dadurch gekennzeichnet, daß** als elektromagnetische Wellen Mikrowellen verwendet werden.

4. Verfahren nach einem der Ansprüche 1 - 3, **dadurch gekennzeichnet, daß** ein Absolutwert der Menge des Kohlestaubs durch eine Korrekturfaktor aus einer Durchsatzleistung der Menge an zugeführter Kohle bzw. Kohlestaub vor oder nach beispielsweise einer Mühle und der Durchsatzleistung entsprechend den Einzelmessungen ermittelt wird.

5. Verfahren nach wenigstens einem der Ansprüche 1 - 4, **dadurch gekennzeichnet, daß** durch die Reflexion der elektromagnetischen Wellen auch die Geschwindigkeit der Feststoffanteile ermittelt wird.

6. Verfahren nach wenigstens einem der Ansprüche 1 - 5, **dadurch gekennzeichnet, daß** in den Sender auch ein Empfänger für elektromagnetische Wellen integriert wird, wobei es durch die Reflexion der elektromagnetischen Wellen zu einem Dopplereffekt kommt, der zu einer Frequenzverschiebung und Amplitudenänderung führt.

7. Verfahren nach Anspruch 6, **dadurch gekennzeichnet, daß** durch die Frequenzverschiebung bzw. Amplitudenänderung ein Differenzsignal entsteht, das am Empfänger ausgekoppelt wird.

8. Verfahren nach wenigstens einem der Ansprüche 1 - 7, **dadurch gekennzeichnet, daß** die Beladung des Gasstromes und/oder die Geschwindigkeit der Feststoffanteile mit Sollwerten verglichen und danach Ventile bzw. Klappen zur Regelung des Gasstromes und/oder Verbrennungsluft betätigt werden.

9. Verfahren nach wenigstens einem der Ansprüche 1 - 8, **dadurch gekennzeichnet, daß** die Relativwerte der Feststoffanteile in den einzelnen Zuleitungen zu den einzelnen Brennern ermittelt und miteinander verglichen werden.

10. Vorrichtung zur Durchführung des Verfahrens nach wenigstens einem der Ansprüche 1 bis 9, wobei:

- mehrere Zuleitungen (8.1 bis 8.4) vorhanden sind, die jeweils mit einem Brenner (1.1 bis 1.4) verbunden sind;

- jede Zuleitung (8.1 bis 8.4) eine Messstelle (14.1 bis 14.4) mit einem Sensorrohr (18) durch welches der Gasstrom mit den Feststoffanteilen fliesst, aufweist;

- auf jedem Sensorrohr (18) ein Sender (20) für elektromagnetische Wellen aufsitzt, dem ein Empfänger (21), der die Amplituden der frequenzverschobenen elektromagnetischen Wellen ermittelt, zugeordnet ist;

- Mittel zum Vergleichen der von den einzelnen Empfängern ermittelten Amplituden der frequenzverschobenen elektromagnetischen Wellen, um daraus die Beladung des Gasstromes mit Feststoffanteilen zu schliessen, vorhanden sind.

11. Vorrichtung nach Anspruch 10, **dadurch gekennzeichnet, daß** der Sender (20) über eine Antenne (24.1), ein Winkelgehäuse (25.1) und eine Verbindungsschale (26.1) mit dem Sensorrohr (18) verbunden ist, wobei die Verbindungsschale (26.1) eine Öffnung (27) in dem Sensorrohr (18) umschließt.

12. Vorrichtung nach Anspruch 11, **dadurch gekennzeichnet, daß** auch der Empfänger (21) über eine Antenne (24.2), ein Winkelgehäuse (25.2) und eine Verbindungsschale (26.2) mit dem Sensorrohr (18) verbunden ist, wobei die Verbindungsschale (26.2) eine Öffnung (27) in dem Sensorrohr (18) umschließt.

13. Vorrichtung nach Anspruch 12, **dadurch gekennzeichnet, daß** Sender (20) und Empfänger (21) in einem Winkel (w) geneigt zueinander angeordnet sind.

14. Vorrichtung nach einem der Ansprüche 11 - 13, **dadurch gekennzeichnet, daß** in der Öffnung (27) ein Einsatz (30) zur Erzeugung eines Linseneffektes angeordnet ist.

15. Vorrichtung nach Anspruch 14, **dadurch gekennzeichnet, daß** der Einsatz (30) aus einer Schale (31) aus einer die elektromagnetischen Wellen gering dämpfenden Schicht (31) und einer die elektromagnetischen Wellen ungehindert durchlassenden Schicht (32) besteht.

16. Vorrichtung nach Anspruch 15, **dadurch gekennzeichnet, daß** die geringdämpfende Schicht (31) aus Schmelzbasalt und die nichtdämpfende Schicht (32) aus Kunststoff besteht.

17. Vorrichtung nach Anspruch 14, **dadurch gekennzeichnet, daß** der Einsatz (30) einstückig aus Keramik hergestellt ist.

18. Vorrichtung nach wenigstens einem der Ansprüche 10 - 17, **dadurch gekennzeichnet, daß** in dem Sender (20) auch ein Empfänger (21) für elektromagnetische Wellen integriert ist bzw. eine Antenne sowohl einen Sender (20) als auch einen Empfänger (21) beinhaltet.

19. Vorrichtung nach Anspruch 18, **dadurch gekennzeichnet, daß** die Sender/Empfangseinheit (20, 21) so angeordnet sind, daß eine ausgesandte und reflektierte elektromagnetische Welle (29) senkrecht zum Gasstrom verläuft.

20. Vorrichtung nach wenigstens einem der Ansprüche 10 bis 19, **dadurch gekennzeichnet, daß** der Sender (20) bzw. Empfänger (21) dort an einem Förderrohr (18) angeordnet sind, wo die Verteilung der Feststoffe im Rohr möglichst homogen ist.

21. Vorrichtung nach Anspruch 20, **dadurch gekennzeichnet, daß** der Sender (20) bzw. Empfänger (21) im Bereich einer Rohrkrümmung eingesetzt sind.

22. Vorrichtung nach Anspruch 21, **dadurch gekennzeichnet, daß** Sender (20) bzw. Empfänger (21) nach einem in das Rohr eingebrachten Diffusor eingesetzt sind.

**Claims**

1. Process for regulating the firing of a boiler in a coal-fired power plant by determining the solids content, in particular of coal dust, of a gas flow to this boiler, **characterized in that** electromagnetic waves are sent from a transmitter to a receiver through the solids-laden gas flow at individual feed lines to individual burners and the respective amplitudes of the frequency-shifted electromagnetic waves are determined, compared with one another and the solids content of the gas flow is concluded from this.

2. Process according to Claim 1, **characterized in that** the electromagnetic waves are reflected only once on their path between the transmitter and receiver.

**3.** Process according to Claim 1, **characterized in that** microwaves are used as electromagnetic waves.

**4.** Process according to one of Claims 1 - 3, **characterized in that** an absolute value of the amount of coal dust is determined by a correction factor from the throughput rate of the amount of fed-in coal or coal dust upstream or downstream of, for example, a mill and the throughput rate corresponding to the individual measurements.

**5.** Process according to at least one of Claims 1 - 4, **characterized in that** the velocity of the solids contained is also determined by the reflection of the electromagnetic waves.

**6.** Process according to at least one of Claims 1 - 5, **characterized in that** a receiver for electromagnetic waves is also integrated into the transmitter, the reflection of the electromagnetic waves causing a Doppler effect, which leads to a frequency shift and change in amplitude.

**7.** Process according to Claim 6, **characterized in that** the frequency shift or change in amplitude produces a differential signal, which is coupled out at the receiver.

**8.** Process according to at least one of Claims 1 - 7, **characterized in that** the solids content of the gas flow and/or the velocity of the solids contained are compared with setpoint values and, on the basis of this, valves or dampers for regulating the gas flow and/or combustion air are actuated.

**9.** Process according to at least one of Claims 1 - 8, **characterized in that** the relative values of the solids contained in the individual feed lines to the individual burners are determined and compared with one another.

**10.** Apparatus for carrying out the process according to at least one of Claims 1 to 9, in which:

- a plurality of feed lines (8.1 to 8.4) are present, each connected to a burner (1.1 to 1.4);

- each feed line (8.1 to 8.4) has a measuring point (14.1 to 14.4) with a sensor tube (18), through which the gas flow containing solids flows;

- mounted on each sensor tube (18) is a transmitter (20) for electromagnetic waves, assigned to which is a receiver (21), which determines the amplitudes of the frequency-shifted electromagnetic waves;

- means for comparing the amplitudes of the frequency-shifted electromagnetic waves, determined by the individual receivers, in order to conclude from this the solids content of the gas flow, are present.

**11.** Apparatus according to Claim 10, **characterized in that** the transmitter (20) is connected via an antenna (24.1), an angular housing (25.1) and a connecting shell (26.1) to the sensor tube (18), the connecting shell (26.1) enclosing an opening (27) in the sensor tube (18).

**12.** Apparatus according to Claim 11, **characterized in that** the receiver (21) is also connected via an antenna (24.2), an angular housing (25.2) and a connecting shell (26.2) to the sensor tube (18), the connecting shell (26.2) enclosing an opening (27) in the sensor tube (18).

**13.** Apparatus according to Claim 12, **characterized in that** the transmitter (20) and receiver (21) are arranged such that they are inclined at an angle (w) in relation to each other.

**14.** Apparatus according to one of Claims 11 - 13, **characterized in that** an insert (30) for producing a lens effect is arranged in the opening (27).

**15.** Apparatus according to Claim 14, **characterized in that** the insert (30) comprises a shell (31) of a layer (31) which slightly attenuates the electromagnetic waves and a layer (32) which allows the electromagnetic waves through unhindered.

**16.** Apparatus according to Claim 15, **characterized in that** the slightly attenuating layer (31) consists of fusion-cast basalt and the non-attenuating layer (32) consists of plastic.

**17.** Apparatus according to Claim 14, **characterized in that** the insert (30) is produced in one piece from ceramic.

**18.** Apparatus according to at least one of Claims 10 - 17, **characterized in that** a receiver (21) for electromagnetic waves is also integrated in the transmitter (20) or an antenna comprises both a transmitter (20) and a receiver (21).

**19.** Apparatus according to Claim 18, **characterized in that** the transmitter/receiving unit (20, 21) is arranged in such a way that a transmitted and reflected electromagnetic wave (29) runs perpendicularly in relation to the gas flow.

**20.** Apparatus according to at least one of Claims 10 to 19, **characterized in that** the transmitter (20) or receiver (21) is arranged on a conveying tube (18) at the location where the distribution of the solids in the tube is as homogeneous as possible.

**21.** Apparatus according to Claim 20, **characterized in that** the transmitter (20) and receiver (21) are fitted in the region of a tube bend.

**22.** Apparatus according to Claim 21, **characterized in that** the transmitter (20) and receiver (21) are fitted downstream of a diffuser introduced into the tube.

**Revendications**

**1.** Procédé de régulation du feu d'une chaudière dans une centrale électrique à charbon, par détermination de la charge en particules solides, en particulier des poussières de charbon, dans un écoulement de gaz alimenté par ladite chaudière,
**caractérisé en ce que**
des ondes électromagnétiques sont émises par un émetteur vers un récepteur à travers l'écoulement de gaz contenant les particules solides, des conduits individuels conduisant vers chacun des brûleurs individuels, et les amplitudes des ondes électromagnétiques décalées en fréquence sont déterminées, comparées les unes aux autres, et une conclusion en est tirée sur la charge en particules solides de l'écoulement de gaz.

**2.** Procédé selon la revendication 1, **caractérisé en ce que** les ondes électromagnétiques ne sont réfléchies qu'une fois dans leur parcours entre l'émetteur et le récepteur.

**3.** Procédé selon la revendication 1, **caractérisé en ce que** comme ondes électromagnétiques, on utilise des micro-ondes.

**4.** Procédé selon l'une des revendications 1 à 3, **caractérisé en ce que** l'on détermine une valeur absolue de la quantité de poussière de charbon par un facteur de correction formé à partir d'un débit de passage du charbon ou de la poussière de charbon apportée en amont ou en aval par exemple d'un broyeur et du débit de passage correspondant aux mesures individuelles.

**5.** Procédé selon au moins l'une des revendications 1 à 4, **caractérisé en ce que** l'on détermine également la vitesse des particules solides par l'intermédiaire de la réflexion des ondes électromagnétiques.

**6.** Procédé selon au moins l'une des revendication 1 à 5, **caractérisé en ce qu'**un récepteur d'ondes électromagnétiques est également intégré dans l'émetteur, la réflexion des ondes électromagnétiques produisant un effet Doppler qui entraîne un décalage en fréquence et une modification d'amplitude.

**7.** Procédé selon la revendication 6, **caractérisé en ce que** le décalage en fréquence ou la modification d'amplitude produisent un signal différentiel qui est découplé au récepteur.

**8.** Procédé selon au moins l'une des revendications 1 à 7, **caractérisé en ce que** la charge en particules solides de l'écoulement de gaz et/ou la vitesse des particules solides sont comparées à des valeurs de consigne, et des vannes ou clapets sont ensuite actionnés pour la régulation de l'écoulement de gaz et/ou de l'air de combustion.

**9.** Procédé selon au moins l'une des revendications 1 à 8, **caractérisé en ce que** les valeurs relatives des teneurs en solides dans les conduits individuels conduisant vers les brûleurs individuels sont déterminées et comparées les unes aux autres.

**10.** Dispositif en vue de la mise en oeuvre du procédé selon au moins l'une des revendications 1 à 9, dans lequel:

- plusieurs conduits (8.1 à 8.4), chacun relié à un brûleur (1.1 à 1.4), sont prévus ;
- chaque conduit (8.1 à 8.4) présente un point de mesure (14.1 à 14.4) doté d'un tube de détecteur (18) dans lequel s'écoule l'écoulement de gaz contenant des particules solides ;
- sur chaque tube de détecteur (18) est installé un émetteur (20) d'ondes électromagnétiques auquel est associé un récepteur (21) qui détermine les amplitudes des ondes électromagnétiques décalées en fréquence ;
- des moyens de comparaison des amplitudes des ondes électromagnétiques décalées en fréquence déterminées par les récepteurs individuels sont prévus, pour en tirer des conclusions sur la charge de l'écoulement de gaz en particules solides.

**11.** Dispositif selon la revendication 10, **caractérisé en ce que** l'émetteur (20) est relié par l'intermédiaire d'une antenne (24.1), un boîtier coudé (25.1) et une coquille de liaison (26.1) au tube détecteur (18), la coquille de liaison (26.1) entourant une ouverture (27) ménagée dans le tube de détecteurs (18).

**12.** Dispositif selon la revendication 11, **caractérisé en ce que** le récepteur (21) est également relié par une antenne (24.2), un boîtier coudé (25.2) et une coquille de liaison (26.2) au tube détecteur (18), la coquille de liaison (26.2) entourant une ouverture (27) ménagée dans le tube de détecteur (18).

13. Dispositif selon la revendication 12, **caractérisé en ce que** l'émetteur (20) et le récepteur (21) sont disposés sous une inclinaison mutuelle d'un angle (w).

14. Dispositif selon l'une des revendications 11 à 13, **caractérisé en ce qu'**une garniture (30) pour la création d'un effet de lentille est disposée dans l'ouverture (27).

15. Dispositif selon la revendication 14, **caractérisé en ce que** la garniture (30) est constitué d'une coquille (31) constitué d'une couche (31) qui amortit légèrement les ondes électromagnétiques et d'une couche (32) qui laisse passer les ondes électromagnétiques sans obstacle.

16. Dispositif selon la revendication 15, **caractérisé en ce que** la couche (31) légèrement amortissante est constitué de basalte fondu et la couche non amortissante (32) de matière synthétique.

17. Dispositif selon la revendication 14, **caractérisé en ce que** la garniture (30) est réalisée d'un seul tenant en céramique.

18. Dispositif selon au moins l'une des revendications 10 à 17, **caractérisé en ce que** dans l'émetteur (20) est également intégré un récepteur (21) d'ondes électromagnétiques, ou **en ce qu'**une antenne contient également un émetteur (20) ainsi qu'un récepteur (21).

19. Dispositif selon la revendication 18, **caractérisé en ce que** l'unité d'émetteur/récepteur (20, 21) est disposée de telle sorte qu'une onde électromagnétique (29) directe et réfléchie se propage perpendiculairement à l'écoulement de gaz.

20. Dispositif selon au moins l'une des revendications 10 à 19, **caractérisé en ce que** l'émetteur (20) ou le récepteur (21) sont disposés dans un tube de transport (18), en un emplacement où la répartition des solides dans le tube est la plus homogène possible.

21. Dispositif selon la revendication 20, **caractérisé en ce que** l'émetteur (20) ou le récepteur (21) sont utilisés dans une zone courbe du tube.

22. Dispositif selon la revendication 21, **caractérisé en ce que** l'émetteur (20) ou le récepteur (21) sont installés en aval d'un diffuseur inséré dans le tube.

Fig. 1

Fig. 2

Fig.3

Fig. 4